# EUROPÄISCHE PATENTSCHRIFT

(11) **EP 2 619 046 B1**
(45) Veröffentlichungstag und Bekanntmachung des Hinweises auf die Patenterteilung: **09.11.2016**
(21) Anmeldenummer: 11755332.1
(22) Anmeldetag: 12.09.2011
(51) Int. Cl.: B60T 7/12, B60T 8/17, B60T 8/18, B60T 13/26, B60T 13/36, B60T 13/40, B60T 13/46, B60T 13/57, B60T 15/02, B60T 15/04, B60T 15/18, B60T 15/30, B60T 17/22

(54) **STEUERVENTIL FÜR SELBSTTÄTIGE DRUCKLUFTBREMSEN**
CONTROL VALVE FOR AUTOMATIC COMPRESSED-AIR BRAKES
SOUPAPE DE COMMANDE POUR FREINS À AIR COMPRIMÉ AUTOMATIQUES

(30) Priorität: 20.09.2010 EA 201001382
(43) Veröffentlichungstag der Anmeldung: 31.07.2013
(73) Patentinhaber: KNORR-BREMSE Systeme für Schienenfahrzeuge GmbH, 80809 München (DE)
(72) Erfinder: CZYPIONKA, Simon, 81825 München (DE); KRUSCHE, Michael, 80802 München (DE); KRYLOV, Vladimir, Moskau 127322 (RU); SIMON, Timm, 80636 München (DE); HELLER, Martin, 85716 Unterschleißheim (DE); ROMANOV, Sergey, Moskau 111558 (RU)
(74) Vertreter: Schönmann, Kurt
(86) Internationale Anmeldenummer: PCT/EP2011/065716
(87) Internationale Veröffentlichungsnummer: WO 2012/038279

(56) Entgegenhaltungen:
- DD-A1- 239 166
- DE-A1- 4 309 298
- DE-A1- 4 309 386
- DE-B- 1 088 529
- DE-B- 1 206 942
- DE-B- 1 207 953
- GB-A- 643 864
- GB-A- 972 307
- US-A- 3 610 704
- US-A- 4 163 587
- US-A1- 2002 163 248
- ASADTSCHENKO V.R.: "Avtomatitscheskije Tormosa podvishnogo Sostawa sheleznogo Transporta", 2002, Moskau, Russ., XP002669823, Seiten 71-128, das ganze Dokument

## Beschreibung

Die vorliegende Erfindung betrifft ein Steuerventil für selbsttätige Druckluftbremsen zur Bildung eines Bremszylinderdruckes nach Maßgabe einer Druckdifferenz zwischen einem Druck in der durchgehenden Hauptluftleitung eines Zuges und einem gespeicherten Referenzdruck, der vom Druck in der Hauptluftleitung abgeleitet ist.

Das Einsatzgebiet der vorliegenden Erfindung ist der Schienenfahrzeugbau. Schienenfahrzeuge haben meist eine selbsttätige (automatische) Druckluftbremse, bei der die Absenkung des Druckes in einer Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von Steuerventilen ausgeführt.

Daneben haben diese Steuerventile weitere Funktionen, die mit der Füllung, dem Abschluss und der Entlüftung von Volumen mit gespeicherter Druckluft, mit der Einstellung bestimmter statischer Kennlinien des Bremszylinderdruckes und mit der Beschleunigung der Übertragung von als Druckhöhe kodierten Signalen in der Hauptluftleitung zusammenhängen.
Schließlich kommen Funktionen hinzu, die auch bei schneller und starker Änderung des Druckes in der Hauptluftleitung eine nur allmähliche Änderung des Druckes in den Bremszylindern sichern, um den auftretenden Ruck an den Fahrzeugen und die Längskräfte innerhalb des Zuges zu begrenzen.

Aus dem Fachbuch Asadtschenko, V.R.: Avtomatitscheskije Tormosa podvishnogo Sostawa sheleznogo Transporta (russ.), Moskau 2002, Seite 71 ff geht das allgemeine Prinzip eines Steuerventils hervor. Das Steuerventil ist gewöhnlich an einem Ventilträger angebracht und die notwendigen Druckluftverbindungen werden mit den betreffenden Anschlüssen am Ventilträger hergestellt. Innerhalb des Trägers befinden sich Kammern für den Steuerdruck S (Schieberkammer-Druck) und den Referenzdruck A. Das Steuerventil besteht hier aus einem Hauptteil und einem Leitungsteil. Die Erzeugung des Bremszylinderdruckes obliegt dem Hauptteil, während das Leitungsteil einen Steuerdruck S erzeugt. Beide Drücke A und S dienen zur Steuerung des Hauptteils, wobei der Druck A beim Anlegen der Bremse die Referenz zum Regelbetriebsdruck, also des ursprünglichen Druckes in der Hauptluftleitung in Fahrtstellung, der Druck S die zeitkorrigierte Referenz zum aktuellen Druck in der Hauptluftleitung während der Bremsung herstellt.

Wesentliche Bestandteile des Hauptteils sind der Steuerkolben, die auf diesen wirkende Druckfeder, ein integriertes Doppelsitzventil zum Be- oder Entlüften des angeschlossenen Bremszylinders sowie ein Ausgleichskolben, der vom Bremszylinderdruck gegen die Kraft zweier einstellbarer Druckfedern bewegt wird.

Beim Bremsen wird der Druck in der Hauptluftleitung L abgesenkt. Dementsprechend sinkt auch der am Steuerkolben anstehende Steuerdruck S, während der gegenüberliegende Referenzdruck A im Wesentlichen unverändert bleibt. Die resultierende Bewegung des Steuerkolbens gegen die Druckfeder führt zu einem Öffnen des Einlassventils. Dabei strömt Druckluft aus einem Reservoir über Querbohrungen der hohl gebohrten Kolbenstange des Steuerkolbens zum Einlassventil und über dieses zum Bremszylinder.

Der sich einstellende Bremszylinderdruck C wird dadurch bestimmt, dass der Ausgleichskolben unter der Wirkung des entstehenden Bremszylinderdruckes C in gleicher Richtung ausweicht, bis das Einlassventil wieder schließt. Wann das erfolgt, hängt von den Druckfedern am Ausgleichskolben ab. Diese können verschieden eingestellt werden, um das Steuerventil an leere, mittlere und beladene Fahrzeuge anzupassen.

Bei einem bestimmten Hub des Steuerkolbens wird der wirksame Querschnitt der Querbohrungen gedrosselt, um die Geschwindigkeit des Anstieges des Bremszylinderdruckes zu verlangsamen. Ziel ist es, den Bremszylinderdruck nur so schnell ansteigen zu lassen, dass gefährliche Längskräfte im Zug vermieden werden.

Die vorliegende Lösung hat den Nachteil, dass die Drosselung nur dann optimal ist, wenn ein bestimmter Höchstdruck und ein bestimmtes Bremszylindervolumen vorliegen. Wird z.B. das Fülldiagramm für ein beladenes Fahrzeug mit einem Höchstdruck von 4,2 bar und einem Bremszylinder von 14 Zoll Durchmesser und 100mm Hub optimiert, dann ist die Drosselwirkung der Querbohrungen bei einem Höchstdruck von 3,2 bar zu gering, bei einer Verwendung eines Steuerventils für die doppelte Anzahl von Bremszylinder wäre sie zu groß.

Die Unabhängigkeit der Bremszylinderfüllzeit bei einer Schnellbremsung vom Volumen der Bremszylinder und vom Bremszylinderhöchstdruck wird auch als Einheitswirkung bezeichnet. Steuerventile ohne Einheitswirkung haben den Nachteil, dass sie weniger universell verwendbar sind.

Weiter ergibt sich der Nachteil, dass bei einem bestimmten Hub der Kolbenstange Bohrungen der Zuströmung des Druckes aus dem Reservoir verschlossen werden müssen, wozu Dichtungen über relativ große bzw. zahlreiche Querbohrungen verschoben werden. Hierbei tritt ein erhöhter Verschleiß der Dichtung ein, und es entsteht ein zusätzlicher Herstellungsaufwand, um einen für die Dichtungen verträglichen Kantenzustand der Bohrungen zu erreichen.

Aus der SU 988617 geht eine Abwandlung eines solchen Steuerventils hervor. Die Besonderheit besteht hier insbesondere darin, dass ein zusätzlicher Steuerkolben zur Anwendung kommt, der mit einem Spiel zum bekannten Steuerkolben und einer zusätzlichen Druckfeder zusammenarbeitet. Ziel dieser Anordnung ist die Erhöhung der Zuverlässigkeit der Bewegung der Kolbenstange. Diese hat außer den bereits genannten auch die Funktion, nach Bremsbeginn einen Kanal der Zusätzlichen Entlüftung der Hauptluftleitung zu verschließen, wobei eine bestimmte Genauigkeit bezüglich der Differenz der Referenzdrücke im Moment des Schließens erwünscht ist. Weiter ist ersichtlich, dass die Drosselung der Strömung des Druckes aus dem Reservoir hier durch eine koaxiale Bohrung in der Kolbenstange erfolgt.Die bereits genannten Nachteile werden durch diese Abwandlung nicht beseitigt, wobei dies auch nicht das Ziel der Abwandlung ist.

Eine weitere Abwandlung ist in der RU 2180628 dargestellt. Sie betrifft die Funktion des Schließens des Kanals der Zusätzlichen Entlüftung der Hauptluftleitung, für die nun eine eigene Baugruppe geschaffen wurde. Bezüglich der Drosselung werden wiederum Querbohrungen verwendet, die von Dichtungen überschliffen werden. Die genannten Nachteile werden von dieser Lösung ebenfalls nicht berührt.

Der Nachteil der Abhängigkeit der Bremszylinderfüllzeit vom Verhältnis einer Drossel zum Bremszylindervolumen und einem bestimmte Maximaldruck kann prinzipiell beseitigt werden, wenn das Steuerventil mit einem Relaisventil kombiniert wird. Dabei wirkt die Drossel auf ein unveränderliches Vorsteuervolumen beim Relaisventil, welches die Druckänderung in diesem auf den oder die Bremszylinder überträgt, unabhängig von dessen Volumen, solange es innerhalb bestimmter Grenzen liegt. Dies ist z.B. in der Druckschrift I-EC00.25 der Anmelderin beschrieben.

Hierbei entsteht wiederum der Nachteil, dass ein zusätzliches Relaisventil erforderlich ist, wodurch ein entsprechender baulicher Aufwand entsteht.

Aus der Patentschrift DD 239 166 ist bekannt, die Einheitswirkung an einem Dreidruck-Steuerventil ohne Relaisventil zu erzielen, in dem der mit der Hauptluftleitung verbundenen Kammer des Dreidruck-Steuerventils die für die Bremszylinderfüll- und -entleerungszeit maßgeblichen Düsen vorgeschaltet werden. Diese Lösung hat den Nachteil, dass die Luft aus der Steuerkammer in die Hauptluftleitung strömen könnte, wodurch eine schädliche Verlangsamung der Signalübertragung in der Hauptluftleitung verursacht werden kann.

Der Erfindung liegt die Aufgabe zugrunde, ein Steuerventil zu schaffen, bei dem die Füllzeit des oder der Bremszylinder innerhalb bestimmter Grenzen unabhängig von Volumen und Höchstdruck des Bremszylinders sind und die Notwendigkeit eines zusätzlichen Relaisventils vermieden wird.

Die Aufgabe wird ausgehend von einem pneumatischen Steuerventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass der Strömungsquerschnitt zum Füllen des Bremszylinders aus einem dem Vorratsluftbehälter über das Doppelsitzventil größer ist als ein zur Erreichung der kürzesten normativen Bremszeit bei größtmöglicher Luftmenge in dem mindestens einen Bremszylinder erforderlicher Querschnitt. Zur Erzielung einer Einheitswirkung ist dieser Querschnitt so groß ausgeführt, dass die Druckluft vom Anschluss des Vorratsluftbehälters nicht wesentlich gedrosselt zum Doppelsitzventil gelangt, wodurch der zeitliche Verlauf des Bremszylinderdruckes C vom zeitlichen Verlauf der Differenz zwischen Referenzdruck A und Steuerdruck S nur unwesentlich abweicht. Dies gilt im Rahmen technisch üblicher Bremszylindergrößen und -füllzeiten.

Der Vorteil der erfindungsgemäßen Lösung liegt insbesondere darin, dass durch diese einfache technische Maßnahme eine Einheitswirkung des Steuerventils unabhängig von Größe und Höchstdruckes des Bremszylinders erreicht wird. Die erfindungsgemäße Maßnahme konzentriert sich auf eine gezielte Dimensionierung des Verbindungsquerschnitts bis hin zum Einlassventilsitz des Doppelsitzventils. Ein analoger Vorteil lässt sich auch für die Entleerung des Bremszylinders beim Lösen der Bremse erzielen, wenn auch der Querschnitt der Verbindung zwischen Bremszylinder und der Ausströmung zu Umgebung über das Doppelsitzventil mindestens gleich groß wie ein zur Erreichung der kürzesten normativen Entlüftungszeit bei größtmöglicher Luftmenge im Volumen des Bremszylinders bzw. der Bremszylinder erforderlicher Querschnitt ist.

Prinzipiell ist unter einem Doppelsitzventil die bauliche Kombination zweier Ventile zu verstehen, die wechselweise öffnen oder beide geschlossen sind. Die Ventilsitze können dabei konzentrisch auf gleicher Höhe, aber auch abgestuft oder gegenüberliegend zu einem Verschlusselement liegen, welches im Zusammenwirken einer gemeinsamen oder zweier Dichtungen mit den Ventilsitzen den Einlass und Auslass von Druckluft in den bzw. aus dem Bremszylinder steuert.

Gemäß einer die Erfindung verbessernden Maßnahme wird vorgeschlagen, dass das Doppelsitzventil ein hohlzylinderartiges Verschlusselement aufweist, dessen steuerkolbenseitige Stirnfläche mit einem Einlassventilsitz größeren Durchmessers sowie einem koaxial hierzu angeordneten Auslassventils kleineren Durchmessers zusammenwirkt. Dabei gelangt vom Auslassventilsitz abgeführte Abluft durch das hohlzylinderartige Verschlusselement hindurch an die Umgebung 0. Hierdurch lässt sich in vorteilhafter Weise die Luft auf kurzem Wege abführen, so dass nur recht kurze ventilinterne Kanäle erforderlich sind.

Gemäß einer anderen die Erfindung verbessernden Maßnahme wird vorgeschlagen, dass der wirksame Durchmesser der Einlassventilsitzes dem Innendurchmesser eines das Verschlusselement des Doppelsitzventils außenradial im Bereich einer bodenseitigen Stirnfläche umschließenden Dichtrings entspricht. Mit dieser Maßnahme wird eine druckentlastete Ventilanordnung erzeugt. Bei der so druckentlasteten Ventilanordnung gibt es keine wirksame Belastungsfläche des Drucks aus dem Vorratsdruckbereich auf das Verschlusselement des Doppelsitzventils, so dass lediglich die integrierte, einen Schließdruck für das Verschlusselement aufbringende Druckfeder zur Wirkung kommt.

Weiterhin wird vorgeschlagen, dass der Einlassventilsitz sowie der Auslassventilsitz im Querschnitt konisch ausgebildet sind. Die konische Querschnittsgestaltung erzeugt kreisgenaue Berührungslinien an der steuerkolbenseitigen Stirnfläche des Verschlusselements. Durch solche Berührungslinien wird eine nur sehr geringe Differenz im Durchmesser erzielt, ohne dass bei Öffnung des Ventils eine Drosselung durch einen zu geringen Ringspalt zwischen den Ventilsitzen eintritt. Diese Gestaltung unterstützt die Entlastung des Ventils von Druckkräften.

Gemäß einer weiteren, die Erfindung im Hinblick auf eine druckentlastete Ventilanordnung verbessernde Maßnahme wird vorgeschlagen, dass axial beabstandet zum vorstehend erwähnten bodenseitigen Dichtring am C-Kolben ein weiterer Dichtring vorgesehen ist, der außenradial am Verschlusselement zur Anlage kommt, und zwar speziell an einem Durchmesser der dem wirksamen Durchmesser des Auslassventilsitzes zumindest in etwa entspricht. Da der Auslassventilsitz gegenüber dem diesen koaxial umgebenden Einlassventilsitz einen geringeren Durchmesser besitzt, ist das Verschlusselement im Bereich dieser zusätzlichen Dichtung mit einem Absatz versehen. Zur Realisierung dieser weiteren Druckentlastung ist der zwischen diesem weiteren Dichtring und dem bodenseitigen Dichtring am C-Kolben ausgebildete Raum mit dem Anschluss zum Bremszylinder in Verbindung zu bringen, so dass hierin Bremszylinderdruck ansteht. Mit dieser Maßnahme ergibt sich ein vorteilhaft doppelt druckentlastetes Ventil, welches sich regelungstechnisch präzise beherrschen lässt.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig.1: einen schematischen Längsschnitt durch ein pneumatisches Steuerventil als Stellglied für eine geregelte Druckluftbeaufschlagung eines Bremszylinders nach einem ersten Ausführungsbeispiel,
- Fig.2: einen schematischen Längsschnitt durch ein pneumatisches Steuerventil nach einem anderen Ausführungsbeispiel, und
- Fig.3: einen schematischen Längsschnitt durch das Ventil für den Abschluss des KZE als Detail aus Fig.1.

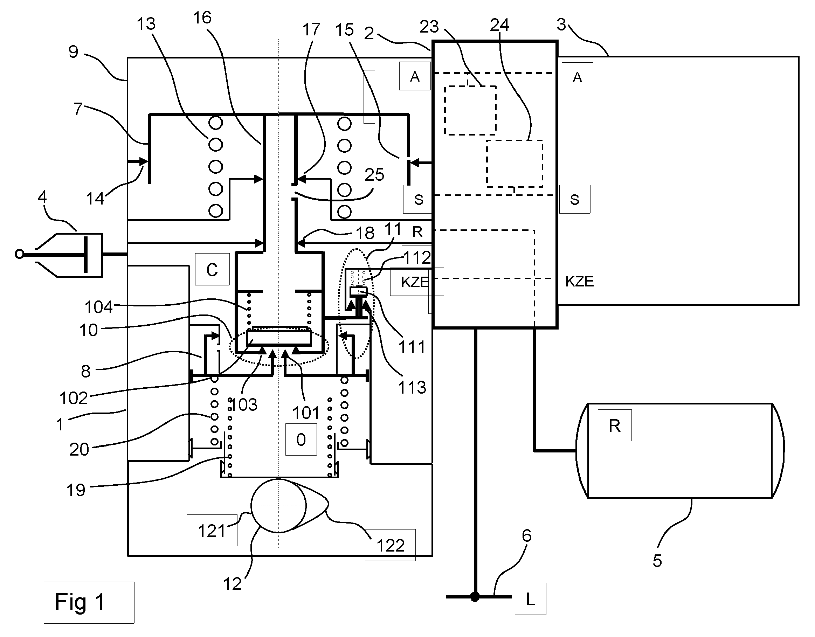

Gemäß Fig. 1 besteht ein Steuerventil aus einem Hauptteil 1, einem Träger 2 und einem Leitungsteil 3. Es ist an einem hier nicht dargestellten Schienenfahrzeug montiert. Am Träger 2 sind Verbindungen zu einem Bremszylinder 4, einem Vorratsluftbehälter 5 und einer Hauptluftleitung 6 angeschlossen.

Der Träger 2 enthält ein Volumen für einen Steuerdruck S und einen Referenzdruck A. Die Volumen können auch durch an den Träger 2 angeschlossene Vorratsluftbehälter 5 dargestellt werden. Weiter enthält der Träger 2 Verbindungen für den Druck R aus dem Vorratsluftbehälter 5 und einen Kanal der zusätzlichen Entlüftung KZE zur Leitung von Druckluft zwischen Haupt- und Leitungsteil 1; 3.

An einer beliebigen Stelle des Steuerventils befinden sich ein nicht dargestelltes Rückschlagventil zur Füllung des Vorratsluftbehälters 5 aus der Hauptluftleitung 6, sowie ein Ventil zur manuellen Entlüftung des Referenzdruckes A.

Das Leitungsteil 3 dient dazu, mit nicht näher dargestellten Mitteln aus dem Druck der Hauptluftleitung 6 den Steuerdruck S und den Referenzdruck A abzuleiten, welche an das Hauptteil 1 weitergeleitet werden. Weiterhin steuert das Leitungsteil 3 bei Beginn einer Bremsung eine Verbindung von der Hauptluftleitung 6 zum Kanal der Zusätzlichen Entlüftung KZE.

Das Hauptteil 1 beihaltet in einem Gehäuse 9 einen Steuerkolben 7, einen Ausgleichskolben 8, ein Doppelsitzventil 10, ein Ventil 11 für den Abschluss des Kanals KZE und eine Verstelleinrichtung 12 für die Einstellung der Laststellung des Steuerventils sowie weitere Elemente wie Druckfedern, Siebe (Filter) und Dichtungen.

Das Doppelsitzventil 10 besteht aus einen Auslassventil 101, einem Ventilkörper 102, einem Einlassventil 103 und einer Druckfeder 104.

Der Steuerkolben 7 ist durch die gegenüberliegenden Drücke A und S belastet, auf der Seite des S-Druckes wirkt eine Druckfeder 13. Der Steuerkolben 7 weist eine Dichtung 14 auf, welche beide Drücke trennt. Die Dichtwirkung kann durch einen Dichtring, ebenso aber auch durch eine Membrane hergestellt werden. Ist die Dichtung 14 ein Dichtring, kann sich dieser im Gehäuse 9 befinden und auf dem Steuerkolben 7 gleiten und dichten. In der Nähe der Dichtung 14 befindet sich eine Düse 15, welche als Bypass wirkend nahe der Ausgangslage des Steuerkolbens 7 eine Verbindung der Drücke A und S darstellt. Als Ausgangslage wird die Position des Steuerkolbens 7 bezeichnet, in der dieser sich bei Gleichheit der Drücke A und S unter der Wirkung der Druckfeder 13 an seinem Anschlag auf der Seite des Druckes A befindet; dies entspricht der Fahrtstellung bei gelöster Bremse.

Der Steuerkolben 7 besitzt weiter eine Kolbenstange 16, die zwischen zwei Dichtungen 17 und 18 eine Zuführung des Druckes R ins Innere der Kolbenstange 16 aufweist. Am Ende der Kolbenstange 16 befindet sich ein Doppelsitzventil 10, welches den Druck aus dem Vorratsluftbehälter 5 in den Bremszylinder 4 - Bremsdruck C - einlässt oder aus diesem in die Umgebung 0 auslässt.

Der Ausgleichskolben 8 wird durch den Bremsdruck C aus dem Bremszylinder 4 belastet; ihm gegenüber steht der Umgebungsdruck 0. Auf der Seite des Umgebungsdruckes 0 befindet sich eine oder mehrere Druckfedern 19, 20. Mindestens eine der Druckfedern kann durch Umstellmittel 12 in Richtung des Ausgleichskolbens 8 verstellt werden.

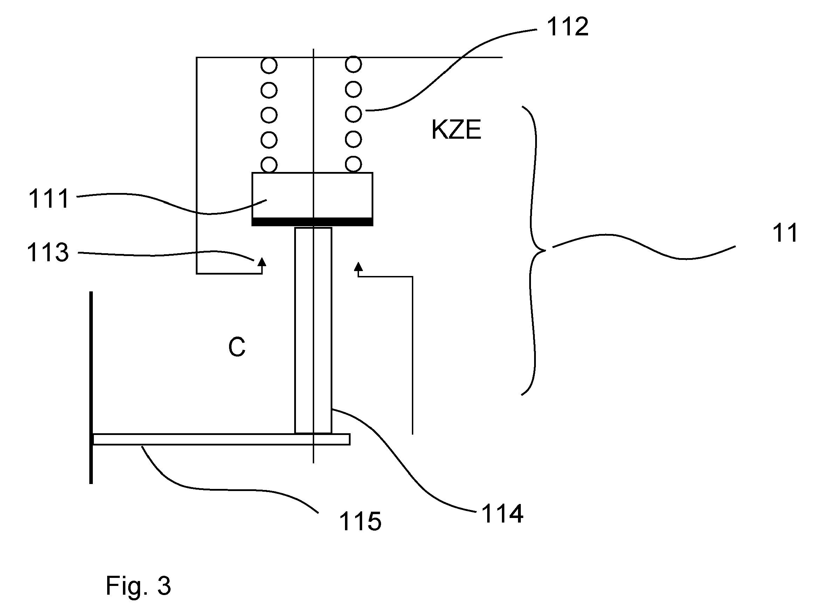

Das detailliert in Fig. 3 dargestellte Ventil 11 besitzt für den Abschluss des Kanals KZE zu den mit dem Bremszylinderdruck C gefüllten Räumen einen Ventilkörper 111, eine Druckfeder 112 und einen Ventilsitz 113. Der Ventilkörper 111 und die Stange 114 besitzen Geometrien, welche nahe einer oberen Endstellung der Kolbenstange 16 mit dem Anschlag 115 an letzterer in Eingriff kommen und das Ventil 11 gegen die Druckfeder 112 öffnen, so dass eine Verbindung vom Kanal der zusätzlichen Entlüftung KZE zu einem Raum entsteht, welcher mit dem Bremszylinder 4 in Verbindung steht und somit den Bremszylinderdruck C enthält.

Die Wirkungsweise der Anordnung beim Bremsen des Schienenfahrzeuges ist folgende: Zum Bremsen wird durch den Lokführer oder andere Mittel der Druck in der Hauptluftleitung 6, ausgehend von einem Regelbetriebsdruck, abgesenkt. Diese Absenkung wird durch das Leitungsteil 3 auf den Steuerdruck S übertragen, der Referenzdruck A bleibt zunächst unverändert. Ist die Drucksenkung ausreichend schnell und stark, um die Wirkung des Drucksausgleichs über die Düse 15 sowie die Anfangskraft der Druckfeder 13 zu überwinden, kommt es zu einer Bewegung des Steuerkolbens 7 in Richtung des Ausgleichskolbens 8. Diese Bewegung ist gerade so groß, dass ein Gleichgewicht von Druck- und Federkräften am Steuerkolben 7 wieder hergestellt wird. Durch die Annäherung der Kolben kommt es zu einer Berührung des Auslassventils 101 mit dem Ventilkörper 102 des Doppelsitzventils 10. Bei einer weiteren Bewegung in diese Richtung hebt der Ventilkörper 102 vom Einlassventil 103 ab, so dass Druckluft aus dem Vorratsluftbehälter 5 über die hohle Kolbenstange 16 des Steuerkolbens 7 zum Bremszylinder strömen kann.

Eine weitere Funktion des Leitungsteils 3 besteht darin, bei Beginn einer Bremsung eine Verbindung von der Hauptluftleitung 6 zum Kanal der zusätzlichen Entlüftung KZE zu öffnen. Dadurch strömt Druckluft aus der Hauptluftleitung 6 ebenfalls zum Bremszylinder 4, solange das Auslassventil 102 noch geöffnet ist, gleichzeitig auch in die Umgebung 0. Infolge des Ansteigens der Druckdifferenz A - S bewegt sich die Kolbenstange 16 mit dem Anschlag 115, der Stange 114 und dem Ventilkörper 111 nach unten bis sich letzterer auf den Ventilsitz 113 setzt und das Ventil 11 somit geschlossen ist. bei einem weiteren Hub des Steuerkolbens 7 kommen die genannten Teile außer Eingriff und es entsteht ein Spiel zwischen der Stange 114 und dem Anschlag 115 oder zwischen der Stange 114 und dem Ventilkörper. Damit ist das Ausströmen von Druckluft aus der Hauptluftleitung 6 bei Bremsbeginn auf diesem Weg unterbrochen, wobei sich eine genau vorgesehene Druckdifferenz A-S, somit auch ein vorbestimmter anfänglicher Bremsdruck C eingestellt hat. Diese Funktion dient der Beschleunigung der Fortpflanzung der Druckabsenkung in der Hauptluftleitung 6 auf der Zuglänge und sichert ein schnelles und richtig dosiertes erstes Anlegen der Bremse.

Der sich aufbauende Bremsdruck C übt eine Kraft auf den Ausgleichskolben 8 aus, der sich bis zur Erreichung eines Kräftegleichgewichts mit der Kraft der Druckfedern 19, 20 bewegt. Somit entspricht jede Bremsstufe, durch den Wert der Absenkung des Druckes L gesteuert, einem bestimmten Weg des Steuerkolbens. Sobald der vorbestimmte Bremsdruck C erreicht ist, hat auch der Ausgleichskolben 8 eine entsprechende Bewegung ausgeführt - nach welcher sowohl Ein- als auch Auslassventil 101; 103 geschlossen sind (Abschlussstellung).

Die Verstelleinrichtung 12 für die Einstellung der Laststellung des Steuerventils bestehen aus einer Schaltwelle 121, welche ein Stellnocken 122 trägt. Die Schaltwelle 121 kann von einer Seite des Steuerventils durch einen Bediensteten der Eisenbahn gedreht werden, um das Steuerventil an die aktuelle Beladung des Wagens anzupassen. Dabei wird der Stellnocken 122 an einen Anschlag für die Druckfeder 19 angenähert oder von dieser entfernt. Dies hat zur Folge, dass bei gleichem Weg des Ausgleichskolbens 8 durch die Druckfeder 19 eine größere oder eine kleinere Kraft ausgeübt wird. Insbesondere kann die Druckfeder 19 in der entfernten Position "leer" einen Abstand zum Ausgleichskolben 8 aufweisen, der auf dem ganzen möglichen Arbeitshub das Entstehen einer Federkraft verhindert.

Wie bereits beschrieben, entspricht der Bremsdruck C infolge des Kräftegleichgewichtes am Ausgleichskolben 8 der auf die Kolbenfläche bezogenen Kraft der Druckfedern 19, 20. Somit kann eine hohe Federkraft zur Erzielung eines hohen Bremsdruckes C für ein beladenes Fahrzeug eingestellt werden, für ein leeres oder teilbeladenes Fahrzeug wird durch entgegengesetzte Verstellung des Stellnockens 122 eine geringere Federkraft für einen niedrigeren Bremsdruck C erzielt.

Eine vorteilhafte Ausführung ergibt sich für das teilbeladene Fahrzeug insbesondere dann, wenn die Druckfeder eine progressive Kennlinie hat, oder wenn eine - nicht dargestellte - dritte Druckfeder speziell für die Stellung "teilbeladen" durch das exzentrische Element spielfrei zum Ausgleichskolben eingerückt wird, wobei eine weitere Druckfeder für die Stellung "beladen" noch Spiel hat.

Für die Stellung "beladen" kann durch die progressive Kennlinie oder durch ein anfängliches Spiel der Druckfeder 19 ebenfalls ein Vorteil erzielt werden, weil die anfänglich relativ geringe Gesamt-Federkraft ein nicht zu scharfes erstes Einbremsen bewirkt, bei weiterem Arbeitshub steigen dann Federkraft und Bremsdruck C stärker an.

Die Verminderung des Bremsdruckes C zum Lösen der Bremse erfolgt, gesteuert durch ansteigenden Druck L in der Hauptluftleitung und/oder abfallenden Druck A, in umgekehrte Richtung. Nahe der Ausgangsstellung öffnet das Ventil 11 für den Abschluss des Kanals KZE wieder. Das Steuerventil ist dann für ein erneutes beschleunigtes Einbremsen bereit, sobald das Leitungsteil 3 einen Bremsbeginn erkennt und den Weg für die Druckluft aus der Hauptluftleitung 6 zum Kanal KZE freigibt.

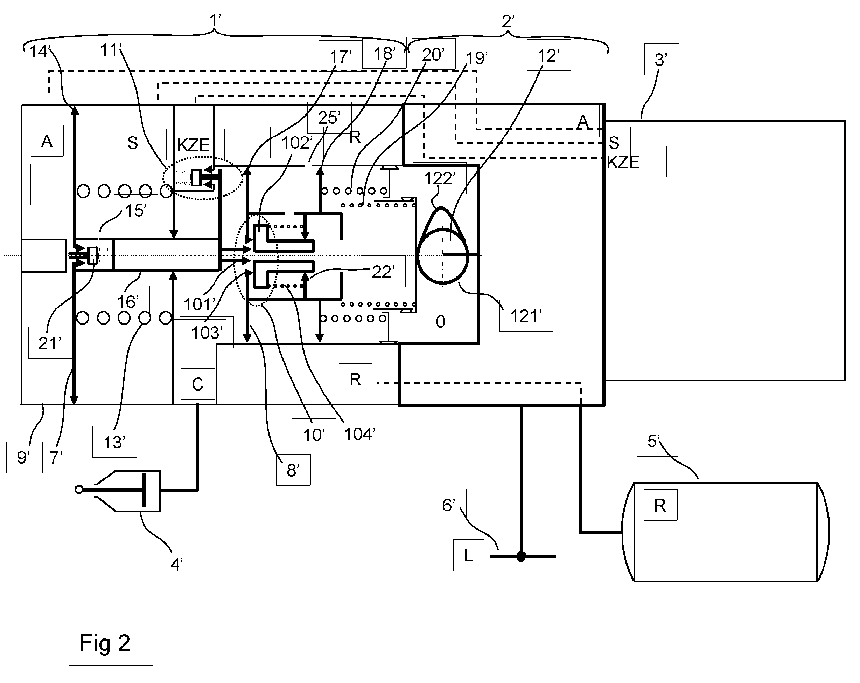

In Figur 2 ist eine alternative Ausführungsform dargestellt. Die Wirkungsweise dieser Ausführung entspricht der bereits beschriebenen.

Anstelle der genannten, von einer Dichtung zu überschleifenden Düse 15 für die Verbindung der Drücke A und S zur Erreichung einer bestimmten Unempfindlichkeit des Steuerventils ist ein Ventil dargestellt, das durch den Steuerkolben 7' in einer geöffneten Stellung gehalten ist, solange sich dieser in oder nahe der Ausgangsstellung befindet.

Die Dichtungen 17' und 18' zur Zuführung des Druckes R aus dem Vorratsluftbehälter 5' zum Einlassventilsitz 103' befinden sich hier am Ausgleichskolben 8', ebenso wie auch das Doppel sitzventil 10'.

Die Dichtungen am Ausgleichskolben 8' und am Steuerkolben 7' dichten in dieser Ausführung in der Laufbuchse statt auf dem Kolbenmantel. Die Verstelleinrichtung befindet sich nun im Trägergehäuse statt im Gehäuse des Hauptteils 1' des Steuerventils.

### Bezugszeichenliste

- 1: Hauptteil
- 2: Träger
- 3: Leitungsteil
- 4: Bremszylinder
- 5: Vorratsluftbehälter
- 6: Hauptluftleitung
- 7: Steuerkolben
- 8: Ausgleichskolben
- 9: Gehäuse
- 10: Doppelsitzventil
101 Auslassventil
102 Ventilkörper
103 Einlassventil
104 Druckfeder
- 11: Ventil für den Abschluss des Kanals KZE
111 Ventilkörper
112 Druckfeder
113 Ventilsitz
114 Stange
115 Anschlag
- 12: Verstelleinrichtung
- 13: Druckfeder
- 14: Dichtung
- 15: Düse
- 16: Kolbenstange
- 17: Dichtung
- 18: Dichtung
- 19: Druckfeder
- 20: Druckfeder
- 21: Ventil
- 22: Dichtung
- 23: Volumen für einen Steuerdruck S
- 24: Volumen für einen Steuerdruck A
- 25: Zuführung
alle Bezugszeichen in Fig. 2 mit in gleicher Entsprechung.
- A: Referenzdruck
- S: Steuerdruck
- L: Hauptluftleitung
- C: Bremszylinderdruck
- R: Vorratsluftdruck
- KZE: Kanal der zusätzlichen Entlüftung

## Patentansprüche

1. Steuerventil für selbsttätige Druckluftbremsen zur Bildung eines Bremszylinderdruckes (C) in mindestens einem angeschlossenen Bremszylinder (4) nach Maßgabe einer Druckdifferenz zwischen einem Druck (L) in einer angeschlossenen Hauptluftleitung (6) eines Zuges und einem gespeicherten Referenzdruck (A),
bestehend aus einem Hauptteil (1), einem Leitungsteil (2) und einem Träger (3), wobei das Hauptteil (1) folgende Teile enthält:
einen Steuerkolben (7), der einerseits von dem Referenzdruck (A), andererseits von einem Steuerdruck (S) und mindestens einer Druckfeder (13) belastet ist, und
einen Ausgleichskolben (8), der vom Druck (C) des Bremszylinders (4) entgegen mindestens einer Druckfeder (20) belastet ist, und
einem Doppelsitzventil (10), bei dem durch Annäherung des Steuerkolbens (7) über eine Kolbenstange (16) ein Einlassventil (103) und durch Entfernung desselben ein Auslassventil (101) öffnet, wobei das Einlassventil (103) in einem Luftweg von einem Vorratsluftbehälter (5) in Richtung des Bremszylinders (4) liegt, und das Auslassventil (101) in einen Luftweg vom Bremszylinder (4) zur Umgebung (0) liegt,
**dadurch gekennzeichnet, dass** zur Erzielung einer Einheitswirkung der Querschnitt des Luftweges vom Vorratsluftbehälter (5) über eine Zuführung (25) in einer hohlen Kolbenstange (16) zum geöffneten Einlassventil (103) so groß ausgeführt ist, dass die Druckluft vom Anschluss des Vorratsbehälters (5) ungedrosselt zum Doppelsitzventil (10) gelangt.

2. Pneumatisches Steuerventil nach Anspruch 1,
**dadurch gekennzeichnet, dass** das Doppelsitzventil (10') als Bestandteil des Ausgleichskolbens (8') ein hohlzylinderartigen Ventilkörper (102') aufweist, dessen Stirnfläche mit einem Einlassventil (103') größeren Durchmessers sowie einem koaxial hierzu angeordneten Auslassventil (101') kleineren Durchmessers zusammenwirkt, wobei die vom Auslassventil (101') abgeführte Abluft durch den hohlzylinderartigen Ventilkörper (102') hindurch an die Umgebung (0) gelangt.

3. Pneumatisches Steuerventil nach Anspruch 1,
**dadurch gekennzeichnet, dass** der wirksame Durchmesser des Einlassventils (103') dem Innendurchmesser eines den Ventilkörper (102') des Doppelsitzventils (10') umschließenden Dichtung (22') entspricht, um eine druckentlastete Ventilanordnung zu schaffen.

4. Pneumatisches Steuerventil nach Anspruch 1,
**dadurch gekennzeichnet, dass** die den Ausgleichskolben (8, 8') abdichtenden Dichtungen (81, 17', 18') als Membranen ausgeführt sind.

5. Pneumatisches Steuerventil nach Anspruch 1,
**dadurch gekennzeichnet, dass** die den Steuerkolben (7, 7') abdichtende Dichtung (14, 14') als Membran ausgeführt sind.

6. Pneumatisches Steuerventil nach Anspruch 1,
**dadurch gekennzeichnet, dass** im Hauptteil (1) eine Verbindung des Referenzdruckes (A) mit dem Steuerdruck (S) über eine Düse (15') durch ein Ventil (21') schaltbar ist, welches sich in oder Nahe der Ausgangsstellung des Steuerkolbens (7) an einen Anschlag annähert und dadurch gegen eine Federkraft betätigbar ist.

## Claims

1. Control valve for automatic compressed air brakes to generate a brake cylinder pressure (C) in at least one connected brake cylinder (4) in accordance with a pressure difference between a pressure (L) in a connected main air line (6) of a train and a stored reference pressure (A), comprising a main part (1), a line part (2) and a carrier (3), wherein the main part (1) contains the following parts:
- a control piston (7) which is loaded firstly by the reference pressure (A) and secondly by a control pressure (S) and at least one pressure spring (13), and
- a compensating piston (8) which is loaded by pressure (C) of the brake cylinder (4) against at least one pressure spring (20), and
- a double-seat valve (10), at which via a piston rod (16) an inlet valve (103) is opened when the control piston (7) approaches and an outlet valve (101) is opened when the control piston moves away, wherein the inlet valve (103) lies in an air path from an air storage container (5) in the direction of the brake cylinder (4), and the outlet valve (101) lies in an air path from the brake cylinder (4) to the environment (0),
**characterized in that**, to achieve a uniform effect, the cross section of the air path from the air storage container (5) via a feed line (25) in a hollow piston rod (16) to the open inlet valve (103) is configured to be so great that the compressed air passes in an unthrottled manner from the connector of the storage container (5) to the double-seat valve (10).

2. Pneumatic control valve according to Claim 1, **characterized in that** the double-seat valve (10') as part of the compensating piston (8') has a hollow cylindrical valve body (102'), the face of which cooperates with an inlet valve (103') of greater diameter and a outlet valve (101') of smaller diameter coaxial thereto, wherein the extraction air discharged from the outlet valve (101') passes through the hollow cylindrical valve body (102') to the environment (0).

3. Pneumatic control valve according to Claim 1, **characterized in that** the effective diameter of the inlet valve (103') corresponds to the inner diameter of a seal (22') surrounding the valve body (102') of the double-seat valve (10'), in order to create a pressure-relieved valve arrangement.

4. Pneumatic control valve according to Claim 1, **characterized in that** the seals (81, 17', 18') sealing the compensating piston (8, 8') are designed as membranes.

5. Pneumatic control valve according to Claim 1, **characterized in that** the seals (14, 14') sealing the control piston (7, 7') are designed as membranes.

6. Pneumatic control valve according to Claim 1, **characterized in that** in the main part (1), a connection of reference pressure (A) to the control pressure (S) via a nozzle (15') can be switched by a valve (21') which approaches a stop in or near the starting position of the control piston (7) and can be activated by said stop against a spring force.

## Revendications

1. Soupape de commande pour freins à air comprimé automatiques pour la formation d'une pression (C) de cylindre de frein dans au moins un cylindre (4) de frein raccordé en fonction d'une différence de pression entre une pression (L) dans un conduit (6) principal raccordé pour de l'air d'un train et une pression (A) de référence mémorisée,
constituée d'une partie (1) principale d'une partie (2) de conduit et d'un support (3), la partie (1) principale comportant les parties suivantes :
un piston (7) de commande, qui est soumis, d'une part, à la pression (A) de référence et, d'autre part, à une pression (S) de commande et à au moins un ressort (13) de compression et
un piston (8) de compensation, qui est soumis à la pression (C) du cylindre (4) de frein à l'encontre d'au moins un ressort (20) de compression et
un clapet (10) à siège double, dans lequel, par rapprochement du piston (7) de commande par une tige (16) de piston, une soupape (103) d'admission et, par éloignement de celui-ci, une soupape (101) d'évacuation s'ouvrent, la soupape (103) d'admission étant dans un trajet d'air allant d'un réservoir (5) d'air en direction du cylindre (4) de frein et la soupape (101) d'évacuation dans un trajet d'air allant du cylindre (4) de frein à l'atmosphère (0),
**caractérisée en ce que**, pour l'obtention d'un effet unitaire, la section transversale du trajet d'air allant du réservoir (5) par un conduit (25) d'apport dans une tige (16) de piston creuse à la soupape (103) d'admission ouverte est réalisée si grande que l'air comprimé parvient sans étranglement du raccord du réservoir (5) à la soupape (10) à siège double.

2. Soupape de commande pneumatique suivant la revendication 1, **caractérisée en ce que** la soupape (10') à siège double a, comme partie constitutive du piston (8') de compensation, un obturateur (102') de type à cylindre creux, dont la surface frontale coopère avec une soupape (103') d'admission de diamètre plus grand, ainsi qu'avec une soupape (101') d'évacuation de diamètre plus petit montée coaxialement à celle-ci, l'air évacué de la soupape (101') d'évacuation arrivant à l'atmosphère (0) en passant par l'obturateur (102') de type en cylindre creux.

3. Soupape de commande pneumatique suivant la revendication 1, **caractérisée en ce que** le diamètre efficace de la soupape (103') d'admission correspond au diamètre intérieur d'une garniture (22') d'étanchéité entourant l'obturateur (102') de la soupape (10') à siège double pour ménager un agencement de soupape non soumis à la pression.

4. Soupape de commande pneumatique suivant la revendication 1, **caractérisée en ce que** les garnitures (81, 17', 18') d'étanchéité rendant étanche le piston (8, 8') de compensation sont réalisées sous la forme de membranes.

5. Soupape de commande pneumatique suivant la revendication 1, **caractérisée en ce que** les garnitures (14, 14') d'étanchéité rendant étanche le piston (7, 7') d'étanchéité sont réalisées sous la forme de membranes.

6. Soupape de commande pneumatique suivant la revendication 1, **caractérisée en ce que**, dans la partie (1) principale, peut être réalisée, par une soupape (21'), une liaison de la pression (A) de référence avec la pression (S) de commande par l'intermédiaire d'une buse (15'), la soupape se rapprochant d'une butée dans ou à proximité de la position initiale du piston (7) de commande et pouvant être actionnée ainsi à l'encontre d'une force de ressort.
